# EUROPEAN PATENT APPLICATION

(11) **EP 4 498 584 A1**
(43) Date of publication of application: **29.01.2025**
(21) Application number: 23188015.4
(22) Date of filing: 27.07.2023
(51) Int. Cl.: H02M 1/00, H02M 1/42, H02M 5/12, H02M 7/145, H02M 7/521, H02M 7/77, H02M 1/32, H02M 1/36

(54) **ENERGY CONVERSION ARRANGEMENT FOR AN ELECTROLYSIS SYSTEM**

(71) Applicant: Siemens Energy Global GmbH & Co. KG, 81739 München (DE)
(72) Inventor: Loku, Fisnik, 90768 Fürth (DE); Dros, Arne, 91052 Erlangen (DE); Lukianov, Semen, 90461 Nürnberg (DE); Buratckii, Artem, 90459 Nürnberg (DE)

(57) **Abstract**

The invention relates to an energy conversion arrangement 100 for an electrolysis system 150. It comprises an adjustable transformer 101 having a primary-side 102 connectable to a power grid 103, and a secondary-side 104, a sensor device 105 sensing an alternating primary-side voltage at the adjustable transformer, rectifier transformers 106,107 having primary-sides 108,109 connected to the adjustable transformer secondary-side and providing on their secondary-sides 110,111,112,113 alternating secondary-side voltages differing by pre-defined phase-shifts, and thyristor rectifier units 114,115,116,117 forming a multipulse-rectifier-system 118 that receives the secondary-side voltages and provides DC-current to electrolyser units 119,120,121,122. The multipulse-rectifier-system comprises synchronization control circuits 123,124,125,126 providing thyristor gate pulses to the thyristor rectifier units at firing angles synchronized with synchronization voltage signals 130 differing by the pre-defined phase-shifts, wherein before application of the pre-defined phase-shifts, the synchronization voltage signals 130 directly correspond to the alternating primary-side voltage sensed at the adjustable transformer primary-side 102.

## Description

The present disclosure in general relates to conversion of electrical energy, in particular to alternating current (AC) to direct current (DC) conversion. More particularly, the present disclosure relates to an energy conversion arrangement for an electrolysis system and to an electrolysis system. Further, the present disclosure relates to a method for supplying DC current to a set of electrolyser units and to a computer program product.

Electrolysis is a process of using electricity to split water into hydrogen and oxygen. This reaction takes place in a unit called an electrolyser, e. g. a polymer electrolyte membrane (PEM) electrolyser unit, and requires the supply of direct current (DC). An electrolysis system may comprise a set, i.e., one or more, potentially many more, electrolyser units. Such sets of electrolyser units constitute a high-power load and may have a high current demand of DC current, e.g., 7-10 kA.

AC to DC converter systems used for providing such DC currents make use of power electronics components for rectifying transformed alternating current received from an AC power source, in particular an AC power grid, i.e., a (public) electric network. Suitable reliable rectifier circuits are, for example, thyristor-based rectifiers.

A thyristor is a solid-state semiconductor device suitable for high-power applications that acts as a bistable switch which conducts when its gate electrode receives a current trigger signal, i.e., a firing angle signal, as the thyristor gate signal, and continues to conduct until the voltage across the device is reverse-biased or removed. The firing angle of the thyristor is the angle at which it is triggered by the firing angle signal. A thyristor-based rectifier, i.e., a thyristor rectifier, is or comprises, for example, a bridge rectifier built with thyristors.

Here, an energy conversion arrangement refers to an AC to DC converter system coupled to receive alternating currents from a transformer system that is connected to an AC power grid. Thyristor-based rectifiers allow control of the active power flow to the set of electrolyser units, which may be considered as a non-linear high-power load, by changing the thyristor firing angles, i.e., by using defined firing angle signals (thyristor gate pulses) for the gate activation of the thyristors of the rectifier circuits.

However, thyristor-based rectifier systems with activation by certain firing angle signals generate harmonics on the AC currents of the energy conversion arrangement, for example on the AC current measured at the point-of-common-coupling, i.e. at the point of connection (POC) to the AC power grid. Particularly, lower harmonics (5th - 25th harmonic) could have a negative impact on the AC power grid.

A harmonic of an AC current signal is a current signal with a frequency that is a positive integer multiple of the frequency of the original periodic AC current signal.

In order to minimize the impact of generated harmonics, multiple rectifiers are connected such as to reduce or cancel out the generated harmonics, thereby forming a multipulse rectifier system. For example, the rectifiers may be connected to form a 24-pulse system: Here, the rectifiers are connected in parallel and each of the rectifiers is connected to a row of electrolyser units. Two neighbouring rectifiers connected in parallel cancel their emitted lower harmonics out, thereby building a 12-pulse system. Two 12-pulse systems cancel their emitting harmonics and thereby build a 24-pulse system.

For supplying the thyristor rectifier units of the multipulse rectifier system with multiple phase-shifted alternating voltage input signals, rectifier transformers, i.e., multiphase transformer systems configured to provide multiple alternating secondary side voltages with defined phase-shifts between themselves, i.e., between the secondary side voltages, are required. These multiple phase-shifted alternating secondary side voltages of the rectifier transformers serve as input voltages for the thyristor rectifier units. However, when the thyristor rectifier units receive the firing angle signals, there is a need for synchronising them, e. g. by means of control units such as phase-locked-loop (PLL) control logic, with the input voltages of the thyristor rectifier units, i.e., a rectifier must synchronise the firing angle with the input voltage at the rectifier, i.e., the zerocrossing of the voltage input, to guarantee that the triggering firing angle signal is set in the correct moment. For instance, if a firing angle is at 90°, the rectifier unit must set the firing angle signal at the instance when its input voltage phase is 90°.

On the other hand, the AC power grid requires any connected facility, such as electricity generating plants, consumers, or other connected networks to abide to its grid code, i.e., a technical specification which defines the parameters the connected facility, and therefore also the energy conversion arrangement of the electrolysis system, has to meet to ensure safe, secure, economic and correct functioning of the electric system. An important parameter is the power factor quality. For example, a power factor, i.e., the ratio of the real power absorbed by the connected facility to the apparent power, may be required to stay above a certain threshold, e. g. above 900.

This may result in a voltage threshold value as specified by the grid code at the POC, e.g., 85 % of the nominal primary side voltage, i.e., of the nominal voltage at a primary side of the transformer system of the energy conversion arrangement.

In order to change or improve the power factor, the transformer system of the energy conversion arrangement comprises an adjustable transformer unit, e. g. a transformer equipped with a tap changer. This allows active adjustment of the voltage provided to the rectifier transformer units and thereby to the thyristor rectifier units depending on the operating point, and therefore allows to improve the power quality at the point-of-common-coupling, i.e., the point of connection (POC).

However, this has the effect that the input voltages of the thyristor rectifier units, which are the secondary side voltages of the transformer system and are used for the synchronizing voltage input in the phase-locked-loop control of the rectifier units, are subject to changes applied to the adjustable transformer unit, i.e., for example depend on the respective tap-position of the transformer tap changer.

These variable secondary side voltages are used by a controller at the same time for determining protection scheme limits as specified by the grid code, such as which voltage levels are acceptable to keep the power factor above the threshold requested by the grid code. Furthermore, not only the voltage level change itself due to a newly adjusted tap-position needs to be taken into consideration, but also any voltage level drop during the commutation process, which may take, e.g., some milliseconds, when a tap-repositioning from one tap-position to another takes place, which may take several seconds, e. g. 3 seconds, within the adjustable transformer unit needs to be constantly monitored, as any undervoltage may lead to a violation of the grid requirements.

It is an objective of the present invention to provide an alternative possibility for DC current supply to a high-power load such as a set of electrolyser units from an AC power grid by means of an energy conversion arrangement in compliance with the grid code of the AC power grid and reduced impact by AC current harmonics that is less dependent on varying parameters of the energy conversion arrangement.

This objective is solved by an energy conversion arrangement for an electrolysis system as stated in claim 1 and an electrolysis system as stated in claim 10. A corresponding method for supplying DC current to a set of electrolyser units and a computer program product are disclosed in claims 11 and 15, respectively. Advantageous additional embodiments of the invention are disclosed in the respective dependent claims.

According to a first aspect of the invention, an energy conversion arrangement for an electrolysis system is provided, which comprises an adjustable transformer (as a first part of a transformer system) having an adjustable transformer primary side (which refers to the primary side winding of the adjustable transformer) connectable to an AC power grid, e. g. via a point-of-common-coupling, and an adjustable transformer secondary side (which refers to the secondary side winding of the adjustable transformer). The energy conversion arrangement further comprises a sensor device configured to sense an alternating primary side voltage at said adjustable transformer primary side, and (as a second part of the transformer system) a set of rectifier transformers having primary sides connected to the adjustable transformer secondary side and configured to provide on their secondary sides a plurality of alternating secondary side voltages differing between themselves at least by pre-defined phase-shifts. Further, the energy conversion arrangement comprises a plurality of thyristor rectifier units configured to form a multipulse rectifier system. This multipulse rectifier system is connected to receive the plurality of alternating secondary side voltages from the rectifier transformers and is connected or connectable to provide DC current to a set of electrolyser units.

The multipulse rectifier system comprises (or is connected to) one or more synchronization control circuits, i.e., control units, configured to provide thyristor gate pulses to the thyristor rectifier units at firing angles synchronized with synchronization voltage signals differing between themselves by the pre-defined phase-shifts. In an embodiment, the synchronization control circuits are implemented as phase-locked-loop circuits, i.e., as phase-locked-loop control logic, as control units. The synchronization control circuits may be provided as separate circuits or as a single circuit configured to provide all the required thyristor gate pulses, i.e., firing angle signals, for the different thyristor rectifier units.

Before the pre-defined phase-shifts are applied to the synchronization voltage signals, said synchronization voltage signals directly correspond to the alternating primary side voltage sensed at the adjustable transformer primary side.

To directly correspond in this context refers to the ability to serve as a synchronization signal and not necessarily to the voltage level, i.e., at least at certain instances, e. g., the zero-crossings, there is no phase-shift between the alternating primary side voltage and the synchronization voltage signals before the pre-defined phase-shifts are applied to the synchronization voltage signals. However, the synchronization voltage signals after application of the pre-defined phase-shifts may be represented, e.g., as alternating synchronization voltage signals or pulse sequences, i.e., sequences of firing pulses, suitably timed according to the pre-defined phase shifts.

The adjustable transformer primary side, i.e., the primary side winding of the adjustable transformer, when connected to the AC power grid, connects to the AC power grid via a point-of-common-coupling, i.e., a point of connection (POC), and the alternating primary side voltage corresponds to the voltage at the POC.

In the described energy conversion arrangement, the power factor can be influenced at least by means of the adjustable transformer, while at the same time synchronization of the firing angle signals of the thyristor rectifier units does not depend on their direct input signals and, thus, on secondary side voltage signals of the transformer system, but merely on the alternating primary side voltage sensed at the primary side winding of the adjustable transformer, in other words the voltage sensed before processing in the transformer system.

This is easy to implement, as the synchronization voltage signals can be generated from the alternating primary side voltage by merely applying constant, known phase-shifts that correspond to the phase-shifts between the secondary side voltages delivered from the rectifier transformers to firing angles resulting from the control units of the thyristor rectifier units. Depending on the rectifier transformers, the known phase-shift may, for example, be a ±30° phase-shift resulting from the secondary-side rectifier transformer configuration or a ±7.5° phase-shift resulting from the primary side of the rectifier transformer configuration.

In an embodiment of the energy conversion arrangement, it further comprises a protection controller unit configured to connect and disconnect the energy conversion arrangement to and from the AC power grid depending on a comparison of the primary side voltage and a nominal threshold voltage of the AC power grid according to a corresponding grid code.

The protection controller unit may, for example, be implemented as logic comparison circuitry together with a switch for connecting and disconnecting the energy conversion circuitry from the AC power grid. In another embodiment, the protection controller unit is a controller, particularly a programmable controller, i.e., a programmable device comprising at least a processor and a memory unit, or is a part of such a controller, connected to receive at least the primary side voltage signal and having stored therein protection scheme rules based on the grid code applicable to the connected power grid.

In this embodiment, the primary side voltage is used for any definition and comparison with thresholds set by a protection scheme based on the grid code. Therefore, any other voltage differences caused by other components of the energy conversion arrangement, such as by the rectifier transformer units and the change of preferably the secondary winding of the adjustable transformer, e. g. a tap-changer and its positions, do not need to be considered as they primarily influence the secondary side voltage of the transformer system. Any voltage drop resulting from the rectifier transformer units, tap-changer, different tap positions or occurring during the commutation, i.e. during the phase of position transition, of the tap-changer do not influence the voltage level on the primary side of the adjustable transformer very much.

Therefore, a threshold limit for the voltage at the POC applied by the protection controller unit can directly be taken from the grid code as a single constant and no additional effort on calculation or estimation of the resulting secondary side voltages is required. Furthermore, this threshold limit is suitable for any situation, including during the commutation when the tap-changer is changing its position. The energy conversion arrangement remains connected to or disconnected from the grid as specified by the corresponding grid code requirements, including Fault-Ride-Through (FRT) scenarios, i.e., the energy conversion arrangement is thereby configured to stay connected in short periods of lower power grid voltages.

In another embodiment, the energy conversion arrangement further comprises a controller unit configured to generate the synchronization voltage signals from the sensed primary side voltage by applying the pre-defined phase-shifts. If the synchronization voltage signals are generated. e. g., as digital signals, the application of the pre-defined phase shifts can be implemented as a simple addition, otherwise the phase-shift may be implemented, e. g., using delay circuits. The synchronization voltage signals may be generated as pulse sequences, i.e., sequences of firing pulses, suitably timed according to the pre-defined phase shifts. In other words, the controller unit uses the alternating voltage signal to generate firing pulse signals, which are additionally shifted by the pre-defined phase-shifts.

In one embodiment, the energy conversion arrangement comprises at least one 6-pulse thyristor bridge rectifier. A 6-pulse thyristor bridge rectifier system may comprise two 3-pulse thyristor bridge rectifier systems connected in parallel.

In one embodiment of the energy conversion arrangement, the multipulse rectifier system comprises at least two 6-pulse thyristor bridge rectifiers connected in parallel to form a 12-pulse thyristor bridge rectifier system and cancel their emitted lower harmonics.

In a preferred embodiment of the energy conversion arrangement, the multipulse rectifier system comprises at least two 12-pulse thyristor bridge rectifier systems connected in parallel to form a 24-pulse thyristor bridge rectifier system and cancel their emitted lower harmonics.

Further, in one embodiment of the energy conversion arrangement the adjustable transformer is an autotransformer, i.e., an electrical transformer with only one winding, in which a portion of the same winding works as both the primary winding side and the secondary winding side of the transformer. Here, the autotransformer is an adjustable transformer where said portion can be changed. Autotransformers have only low losses and can be built smaller and cheaper than common dual-winding transformers.

In one embodiment, the adjustable transformer of the energy conversion arrangement comprises a tap changer for adjusting the adjustable transformer, preferably the secondary side winding. For this, the transformer may comprise a number of taps, i.e., access points, along a winding of the transformer, selectable for connection.

And in one embodiment, the energy conversion arrangement is further configured to change firing angles of the thyristor rectifier units depending on DC current values requested by corresponding connected electrolyser units. Such a DC current control loop may, for example, comprise a controller arranged to control the DC current flow by adjusting the firing angles of the thyristor rectifiers such that the DC current is provided at the required level, i.e., the wanted operation point of the electrolyser modules. For example, the controller may be connected to receive DC current level request signals from connected electrolyser units, configured to determine required firing angles, and connected to supply corresponding firing angle signals to the thyristor rectifier units of the multipulse rectifier system.

According to a second aspect of the invention, an electrolysis system comprises a set of electrolyser units and an energy conversion system according to the first aspect of the invention and therefore implements the advantages and characteristics of the claimed energy conversion system.

And according to a third aspect of the invention, a method for supplying DC current to a set of electrolyser units using an energy conversion arrangement according to the first aspect of the invention is provided. It comprises connecting an adjustable transformer primary side winding of an adjustable transformer of the energy conversion arrangement to an AC power grid and connecting a multipulse rectifier system of the energy conversion arrangement to supply DC current to a set of electrolyser units.

Further, the method comprises sensing an alternating primary side voltage at the adjustable transformer primary side, generating a plurality of synchronization voltage signals directly corresponding to said alternating primary side voltage and applying pre-defined phase-shifts to said synchronization voltage signals.

The method also comprises applying an adjustable transformer secondary side voltage of the adjustable transformer to primary sides of a set of rectifier transformers configured to provide on their secondary sides a plurality of alternating secondary side voltages differing between themselves at least by said pre-defined phase-shifts and applying the plurality of alternating secondary side voltages and thyristor gate pulses at firing angles synchronized with said synchronization voltage signals to a plurality of thyristor rectifier units forming the multipulse rectifier system to generate said DC current for supply to the set of electrolyser units.

In a preferred embodiment of the method, it further comprises comparing the primary side voltage and a nominal threshold voltage of the AC power grid according to a corresponding grid code, and connecting and disconnecting the energy conversion arrangement to and from the AC power grid depending on a result of the comparison.

In one embodiment, the method further comprises changing a tap of the adjustable transformer, preferably on a secondary side winding of the adjustable transformer. And in one embodiment, the method comprises changing firing angles depending on DC current values requested by corresponding connected electrolyser units.

Further, according to a fourth aspect of the invention, a computer program product comprises code portions that, when executed on a programmable apparatus, enable the energy conversion arrangement to carry out steps of a method according to the third aspect of the invention. In other words, the computer program product comprises code portions that, when executed on the programmable apparatus, enable the energy conversion arrangement to carry out a method according to an embodiment of the invention.

The programmable apparatus may be a programmable apparatus of the energy conversion arrangement, in particular a controller of the energy conversion arrangement, adapted to send to, process and receive signals from different units of the energy conversion arrangement, e. g. the alternating primary side voltage signal and firing angle signals. In a preferred embodiment, it is further configured to receive DC current level request signals from connected electrolyser units, configured to determine required firing angles, and connected to supply corresponding firing angle signals to the thyristor rectifier units of the multipulse rectifier system. In another embodiment, the programmable apparatus may be connected or connectable to the energy conversion arrangement.

The computer program product corresponds to a computer program, at least including software code portions for performing steps of the method according to the invention when run on a programmable apparatus, such as the controller or other computer, for enabling the energy conversion arrangement to perform functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of an electrolysis system comprising an energy conversion arrangement according to an embodiment of the invention; and
- Fig. 2: schematically illustrates an example of a method for supplying DC current to a set of electrolyser units using an energy conversion arrangement according to another embodiment of the invention.

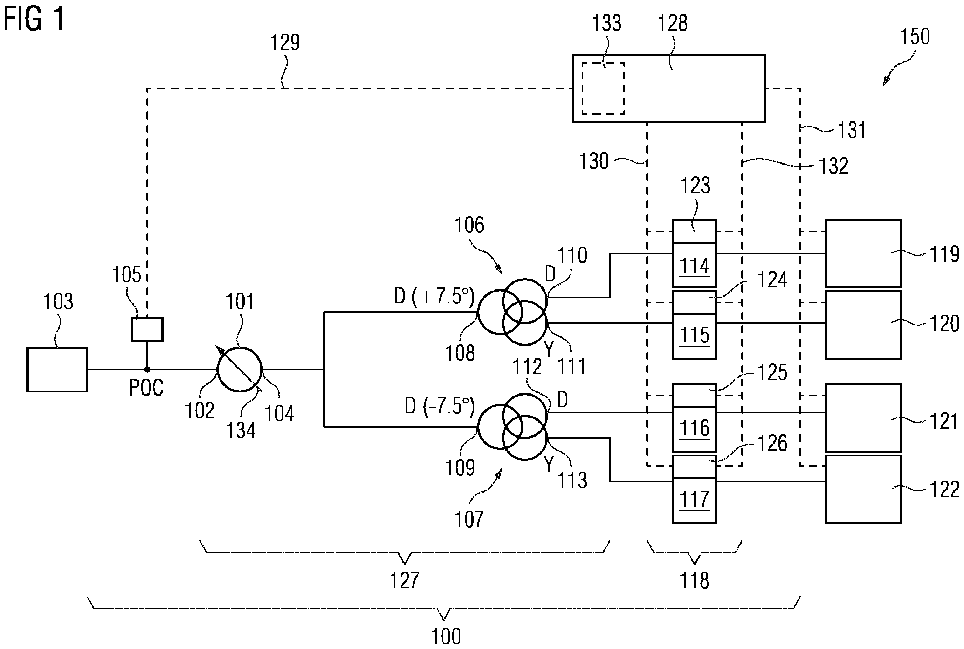

In Fig. 1, an example of an electrolysis system 150 comprising an energy conversion arrangement 100 according to an embodiment of the invention is schematically illustrated. The energy conversion arrangement 100 comprises an adjustable transformer 101 (as a first part of a transformer system 127) having an adjustable transformer primary side 102 (which refers to the primary side winding of the adjustable transformer 101) that is connected to an AC power grid 103 as an AC source via a point-of-common-coupling, i.e., a point of connection POC, and an adjustable transformer secondary side 104 (which refers to the secondary side winding of the adjustable transformer 101). In the embodiment shown in Fig. 1, the adjustable transformer 101 is an autotransformer with a tap changer 134.

The energy conversion arrangement 100 further comprises a sensor device 105 that is connected to sense an alternating primary side voltage at the adjustable transformer primary side 102. In the embodiment shown in Fig. 1, the adjustable transformer primary side 102 is directly connected to the POC and the sensor device senses the alternating primary side voltage at the POC.

A second part of the transformer system 127 consists of a set of rectifier transformers 106, 107 having their primary sides 108, 109 connected to the adjustable transformer secondary side 104. The rectifier transformers 106, 107 provide on their secondary sides 110, 111, 112, 113 a plurality of alternating secondary side voltages which differ between themselves by pre-defined phase-shifts.

The energy conversion arrangement 100 further comprises thyristor rectifier units 114, 115, 116, 117. A thyristor rectifier unit consists of or comprises a thyristor rectifier, i.e., a rectifier circuit built from thyristors, wherein the term "unit" merely takes into account that other circuitry, such as resistors, may be part of the circuit. A rectifier circuit may, for example, be a bridge rectifier circuit. The thyristor rectifier units 114, 115, 116, 117 are connected to form a multipulse rectifier system 118. This multipulse rectifier system 118 receives the alternating secondary side voltages from the rectifier transformers 106, 107 and is connected to provide DC current to a set of electrolyser units 119, 120, 121, 122.

As an example, in the embodiment shown in Fig. 1, for suppression of harmonics, the thyristor rectifier units 114, 115, 116, 117 may be implemented as 6-pulse thyristor bridge rectifiers. A 6-pulse thyristor bridge rectifier system may comprises two 3-pulse thyristor bridge rectifier systems connected in parallel, wherein two thyristor rectifier units 114, 115 are connected in parallel to form a first 12-pulse thyristor bridge rectifier system and cancel their corresponding emitted lower harmonics, and the other two thyristor rectifier units 116, 117 are connected in parallel to form a second 12-pulse thyristor bridge rectifier system and cancel their corresponding emitted lower harmonics, and wherein the two 12-pulse thyristor bridge rectifier systems are connected in parallel to form a 24-pulse thyristor bridge rectifier system for cancelling their emitting harmonics.

The thyristor rectifier units 114, 115, 116, 117 of the multipulse rectifier system 118 each comprise a phase-locked-loop control logic as control unit, i.e., synchronization control circuit 123, 124, 125, 126 that provides thyristor gate pulses to the corresponding thyristor rectifier unit 114, 115, 116, 117 at firing angles synchronized with synchronization voltage signals differing between themselves by the pre-defined phase-shifts.

In the embodiment shown in Fig. 1, a controller unit 128. is configured to generate the synchronization voltage signals from the sensed primary side voltage by applying the pre-defined phase-shifts. Therefore, the controller unit 128 is connected to the sensor device 105 to receive the alternating primary side voltage signal and to generate the phase-shifted synchronization voltage signals 130.

Before the pre-defined phase-shifts are applied to the synchronization voltage signals, the synchronization voltage signals directly correspond to the alternating primary side voltage sensed at the adjustable transformer primary side 102 which in the shown embodiment corresponds to the voltage sensed at the POC.

The controller unit 128 is further connected to the synchronization control circuits 123, 124, 125, 126 of the thyristor rectifier units 114, 115, 116, 117 to provide the phase-shifted synchronization voltage signals 130. In other embodiments, the synchronization control circuits 123, 124, 125, 126 are provided as separate circuits or as a single circuit configured to provide all the required thyristor gate pulses, i.e., firing angle signals.

Further, in the embodiment shown in Fig. 1, the controller unit 128 is part of a current control loop and is configured to change firing angles of the thyristor rectifier units 114, 115, 116, 117 depending on DC current values requested by corresponding connected electrolyser units 119, 120, 121, 122. Here, the controller unit 128 is connected to receive DC current level request signals 131 from connected electrolyser units 119, 120, 121, 122, configured to determine required firing angles such that the DC current is provided at the required level, and connected to supply corresponding firing angle signals 132 to the synchronization control circuits 123, 124, 125, 126 of the thyristor rectifier units 114, 115, 116, 117 of the multipulse rectifier system 118. After synchronization, the firing angle signals 132 serve as thyristor gate pulses to the corresponding thyristor rectifier units 114, 115, 116, 117.

Further, in the embodiment shown in Fig. 1, the controller unit 128 is configured to serve as a protection controller unit 133 that can connect and disconnect the energy conversion arrangement 100 to and from the AC power grid 103 depending on a comparison of primary side voltage represented as the primary side voltage signal 129 sensed by the sensor device 105 and a nominal threshold voltage of the AC power grid 103 according to a corresponding grid code. Here, the controller unit 128 is or comprises a programmable apparatus with at least a processor and a memory (not shown), wherein the memory comprises code portions of a computer program product, that, when executed by the processor of the programmable apparatus, enable the energy conversion arrangement 100 to carry out steps of a method for operating the energy conversion arrangement 100 to supply DC current to the connected electrolyser units 119, 120, 121, 122. Further, the memory unit has stored therein protection scheme rules based on the grid code applicable to the connected power grid 103 and provides the protection controller unit 133 with the nominal threshold voltage of the AC power grid 103 for comparison with the primary side voltage sensed at the POC.

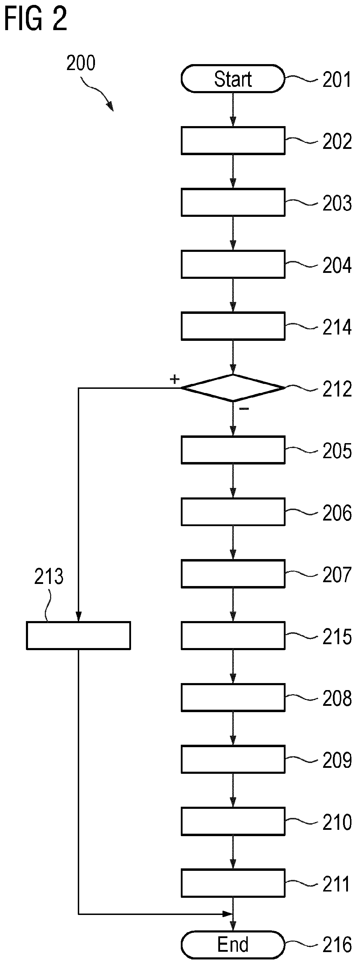

In Fig. 2 an example of a method 200 for supplying DC current to a set of electrolyser units using an energy conversion arrangement according to another embodiment of the invention is schematically illustrated. The method 200 for supplying DC current to a set of electrolyser units using an energy conversion arrangement as shown in Fig. 1 is provided. After start 201, an adjustable transformer primary side winding of an adjustable transformer of the energy conversion arrangement is connected 202 to an AC power grid, and a multipulse rectifier system of the energy conversion arrangement is connected 203 to supply DC current to a set of electrolyser units. In a next step, an alternating primary side voltage is sensed 204 at the adjustable transformer primary side. The method 200 further comprises changing 214 a tap of the adjustable transformer, if necessary, e. g. to influence the power factor of the energy conversion arrangement.

The method 200 further comprises comparing 212 the primary side voltage and a nominal threshold voltage of the AC power grid according to a corresponding grid code, and connecting and disconnecting the energy conversion arrangement to and from the AC power grid depending on a result of the comparison. In case the comparison result reveals that the primary side voltage differs from the nominal threshold voltage by more than an allowed limit (in Fig. 2 indicated as "+"), for example if the primary side voltage is less than e. g. 85% of the nominal threshold voltage of the AC power grid, the energy conversion arrangement is disconnected 213 from the AC power grid, and the method ends 216. However, from the end state 216 the method may move to state start 201 again. Otherwise, i.e., in case the comparison result reveals that the primary side voltage does not differ from the nominal threshold voltage by more than the allowed limit (in Fig. 2 indicated as "-"), the energy conversion arrangement is kept connected to the AC power grid and the method moves to the next steps of generating 205 a plurality of synchronization voltage signals directly corresponding to the alternating primary side voltage and applying 206 pre-defined phase-shifts to the synchronization voltage signals.

In a next step, an adjustable transformer secondary side voltage of the adjustable transformer is applied 207 to primary sides of a set of rectifier transformers. In the shown embodiment, the firing angles can be changed 215 depending on DC current values requested by corresponding connected electrolyser units.

The rectifier transformers provide 208 on their secondary sides alternating secondary side voltages differing between themselves at least by the pre-defined phase-shifts, and the alternating secondary side voltages and thyristor gate pulses are applied 210 at firing angles synchronized with said synchronization voltage signals to thyristor rectifier units forming the multipulse rectifier system to generate the DC current for supply to the set of electrolyser units, after the firing angle signals are synchronized 209 with the synchronization voltage signals. In a next step, the generated DC current is supplied 211 to the set of electrolyser units and the method moves to the end state 216.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, the invention relates to an energy conversion arrangement 100 for an electrolysis system 150. It comprises an adjustable transformer 101 having a primary-side 102 connectable to a power grid 103, and a secondary-side 104, a sensor device 105 sensing an alternating primary-side voltage at the adjustable transformer, rectifier transformers 106,107 having primary-sides 108,109 connected to the adjustable transformer secondary-side and providing on their secondary-sides 110,111,112,113 alternating secondary-side voltages differing by pre-defined phase-shifts, and thyristor rectifier units 114,115,116,117 forming a multipulse-rectifier-system 118 that receives the secondary-side voltages and provides DCcurrent to electrolyser units 119,120,121,122. The multipulse-rectifier-system comprises synchronization control circuits 123,124,125,126 providing thyristor gate pulses to the thyristor rectifier units at firing angles synchronized with synchronization voltage signals 130 differing by the pre-defined phase-shifts, wherein before application of the pre-defined phase-shifts, the synchronization voltage signals 130 directly correspond to the alternating primary-side voltage sensed at the adjustable transformer primary-side 102.

Further, an electrolysis system 150, a method 200 for supplying DC current to a set of electrolyser units, and a computer program product are provided.

### List of reference signs

- 100: energy conversion arrangement
- 101: adjustable transformer
- 102: adjustable transformer primary side
- 103: AC power grid
- 104: adjustable transformer secondary side
- 105: sensor device
- 106: rectifier transformer
- 107: rectifier transformer
- 108: primary side
- 109: primary side
- 110: secondary side
- 111: secondary side
- 112: secondary side
- 113: secondary side
- 114: thyristor rectifier unit
- 115: thyristor rectifier unit
- 116: thyristor rectifier unit
- 117: thyristor rectifier unit
- 118: multipulse rectifier system
- 119: electrolyser unit
- 120: electrolyser unit
- 121: electrolyser unit
- 122: electrolyser unit
- 123: synchronization control circuit
- 124: synchronization control circuit
- 125: synchronization control circuit
- 126: synchronization control circuit
- 127: transformer system
- 128: controller unit
- 129: primary side voltage signal
- 130: synchronization voltage signals
- 131: DC current level request signals
- 132: firing angle signals
- 133: protection controller unit
- 134: tap changer
- 150: electrolysis system
- 200: method for supplying DC current to a set of electrolyser units
- 201: start
- 202: connecting an adjustable transformer primary side
- 203: connecting a multipulse rectifier system
- 204: sensing an alternating primary side voltage
- 205: generating a plurality of synchronization voltage signals
- 206: applying pre-defined phase-shifts to synchronization voltage signals
- 207: applying adjustable transformer secondary side voltage
- 208: providing alternating secondary side voltages
- 209: synchronizing firing angle signals with synchronization voltage signals
- 210: applying plurality of alternating secondary side voltages and thyristor gate pulses
- 211: supplying DC current to the set of electrolyser units
- 212: comparing primary side voltage and nominal threshold voltage of AC power grid
- 213: disconnecting the energy conversion arrangement from the AC power grid
- 214: changing a tap of the adjustable transformer
- 215: changing firing angles depending on DC current values
- 216: end

## Claims

1. Energy conversion arrangement (100) for an electrolysis system (150), comprising
an adjustable transformer (101) having an adjustable transformer primary side (102) connectable to an AC power grid (103), and an adjustable transformer secondary side (104) ;
a sensor device (105) configured to sense an alternating primary side voltage at said adjustable transformer primary side (102);
a set of rectifier transformers (106, 107) having primary sides (108, 109) connected to said adjustable transformer secondary side (104) and configured to provide on their secondary sides (110, 111, 112, 113) a plurality of alternating secondary side voltages differing between themselves at least by pre-defined phase-shifts;
a plurality of thyristor rectifier units (114, 115, 116, 117) configured to form a multipulse rectifier system (118), said multipulse rectifier system (118) connected to receive said plurality of alternating secondary side voltages and connectable to provide DC current to a set of electrolyser units (119, 120, 121, 122), wherein
said multipulse rectifier system (118) comprises one or more synchronization control circuits (123, 124, 125, 126) configured to provide thyristor gate pulses to the thyristor rectifier units (114, 115, 116, 117) at firing angles synchronized with synchronization voltage signals (130) differing between themselves by said pre-defined phase-shifts, and wherein
before application of said pre-defined phase-shifts, said synchronization voltage signals (130) directly correspond to said alternating primary side voltage sensed at said adjustable transformer primary side (102).

2. The energy conversion arrangement as claimed in claim 1, further comprising a protection controller unit (133) configured to connect and disconnect the energy conversion arrangement (100) to and from the AC power grid (103) depending on a comparison of said primary side voltage and a nominal threshold voltage of the AC power grid (103) according to a corresponding grid code.

3. The energy conversion arrangement as claimed in claim 1 or claim 2, further comprising a controller unit (128) configured to generate said synchronization voltage signals (130) from said sensed primary side voltage by applying said pre-defined phase-shifts.

4. The energy conversion arrangement as claimed in any of the preceding claims, wherein said multipulse rectifier system (118) comprises at least one 6-pulse thyristor bridge rectifier.

5. The energy conversion arrangement as claimed in any of the preceding claims, wherein said multipulse rectifier system (118) comprises at least two 6-pulse thyristor bridge rectifiers connected in parallel to form a 12-pulse thyristor bridge rectifier system.

6. The energy conversion arrangement as claimed in any of the preceding claims, wherein said multipulse rectifier system (118) comprises at least two 12-pulse thyristor bridge rectifier systems connected in parallel to form a 24-pulse thyristor bridge rectifier system.

7. The energy conversion arrangement as claimed in any of the preceding claims, wherein said adjustable transformer (101) is an autotransformer.

8. The energy conversion arrangement as claimed in any of the preceding claims, wherein said adjustable transformer (101) comprises a tap changer (134) for adjusting said adjustable transformer (101).

9. The energy conversion arrangement as claimed in any of the preceding claims, further configured to change firing angles of said thyristor rectifier units (114, 115, 116, 117) depending on DC current values requested by corresponding connected electrolyser units (119, 120, 121, 122).

10. Electrolysis system (150), comprising a set of electrolyser units (119, 120, 121, 122) and an energy conversion system (100) as claimed in any of claims 1 to 9.

11. Method (200) for supplying DC current to a set of electrolyser units using an energy conversion arrangement as claimed in any of claims 1 to 9, comprising
connecting (202) an adjustable transformer primary side of an adjustable transformer of the energy conversion arrangement to an AC power grid;
connecting (203) a multipulse rectifier system of the energy conversion arrangement to supply DC current to a set of electrolyser units;
sensing (204) an alternating primary side voltage at said adjustable transformer primary side;
generating (205) a plurality of synchronization voltage signals directly corresponding to said alternating primary side voltage and applying (206) pre-defined phase-shifts to said synchronization voltage signals;
applying (207) an adjustable transformer secondary side voltage of the adjustable transformer to primary sides of a set of rectifier transformers configured to provide on their secondary sides a plurality of alternating secondary side voltages differing between themselves at least by said pre-defined phase-shifts; and
applying (210) said plurality of alternating secondary side voltages and thyristor gate pulses at firing angles synchronized with said synchronization voltage signals to a plurality of thyristor rectifier units forming the multipulse rectifier system to generate said DC current for supply to the set of electrolyser units.

12. The method as claimed in claim 11, further comprising
comparing (212) said primary side voltage and a nominal threshold voltage of the AC power grid according to a corresponding grid code; and
connecting and disconnecting (213) the energy conversion arrangement to and from the AC power grid depending on a result of the comparison.

13. The method as claimed in claim 11 or claim 12, further comprising
changing (214) a tap of the adjustable transformer.

14. The method as claimed in any of claims 11 to 13, further comprising
changing (215) firing angles depending on DC current values requested by corresponding connected electrolyser units.

15. A computer program product, comprising code portions that, when executed on a programmable apparatus, enable the energy conversion arrangement to carry out steps of a method according to any of the claims 1 to 14.
